# EUROPEAN PATENT APPLICATION

(11) **EP 1 437 866 A1**
(43) Date of publication of application: **14.07.2004**
(21) Application number: 03290043.3
(22) Date of filing: 08.01.2003
(51) Int. Cl.: H04L 12/56, H04L 29/06

(54) **A method for optimising the support of streaming services in the packet switched domain of a mobile communication system**

(71) Applicant: Evolium S.A.S., 75008 Paris (FR)
(72) Inventor: Muniere, Vincent, 92190 Meudon (FR); Thiebaut, Laurent, 92160 Antony (FR)
(74) Representative: El Manouni, Josiane

(57) **Abstract**

A method for optimising the support of streaming services in the packet switched domain of a mobile communication system, a method wherein information representative of time alignment capability of a mobile station is sent by the mobile station to the network.

## Description

The present invention is generally concerned with mobile communication systems.

Mobile communication systems in a general way are subject to standardisation ; therefore for a more detailed description of such systems one may refer in particular to the corresponding standards, published by the corresponding standardisation bodies.

Briefly, the general architecture of such systems is divided into a Radio Access Network (RAN), mainly responsible for transmission and management of radio resources on the radio interface between Mobile Stations (MS) and the network, and a Core Network (CN), mainly responsible for switching and managment of the communications.

The evolutions of technology in such systems generally lead to a distinction between second generation systems and third generation systems.

A typical example of a second generation system is GSM (« Global System for Mobile communication »). The radio access technology used by the GSM RAN is based on multiple access techniques of FDMA/TDMA type (where FDMA stands for « Frequency Division Multiple Access » and TDMA stands for « Time Division Multiple Access »). The GSM RAN is composed of subsystems called BSS (« Base Station Subsystems ») and the GSM CN includes network elements such as MSC (« Mobile Switching Center ») and GMSC (« Gateway Mobile Switching Center »).

Initially, GSM was mainly intended for providing real-time services such as in particular telephony services, based on circuit-switched technology. GSM has next evolved towards providing non real-time services, such as in particular data transfer services, based on packet-switched technology. This evolution was made possible thanks to the introduction of GPRS (« General Packet Radio Service »), including the introduction of two new network elements in the CN, i.e. SGSN (« Serving GPRS Support Node »), and GGSN (« Gateway GPRS Support Node »). It is recalled that packet-switched technology enables a more efficient use of available resources, by sharing resources at any instant between different users.

A typical example of a third generation system is UMTS (« Universal Mobile Telecommunication System »). UMTS offers third generation services, including high bit-rates for both real-time and non real-time services. The radio access technology used by the UMTS RAN is based on multiple access techniques of CDMA type (where CDMA stands for « Code Division Multiple Access »). The UMTS RAN is also called UTRAN (« UMTS Terrestrial Radio Access Network ») and the UMTS CN includes network elements relating to packet-switched (PS) domain and network elements relating to circuit-switched (CS) domain.

Now, a further evolution of GSM is towards offering third generation services. A first step of this evolution corresponds to the introduction of EDGE (« Enhanced Data rates for GSM evolution ») enabling higher bit-rates on the radio interface thanks to the use of modulation techniques of higher spectral efficiency. A second step of this evolution corresponds to the support of packet-based real-time services.

When packet-based technologies are used, the Quality of Service (QoS) becomes an important issue. The QoS architecture in third generation systems is defined in the 3GPP TS 23.107 specification published by 3GPP (« 3^{rd} Generation Partnership Project »). This QoS architecture relies on different Bearer Services characterized by different QoS attributes including : traffic class, maximum bitrate, guaranteed bitrate, transfer delay, traffic handling priority, ...etc. Further, a distinction is made between four classes of traffic, respectively : conversational, streaming, interactive, background. Conversational and streaming classes are mainly used for real-time traffic flows. A common requirement for these two classes is that the time relation between information entities of the stream should be preserved. However, contrary to the conversational class, the streaming class does not have any requirement on a low transfer delay.

The present invention is more particularly concerned with the support of streaming services in the Packet Switched (PS) domain in such systems, in particular when considering GERAN access technology (where GERAN stands for « GSM/EDGE Radio Access Network »).

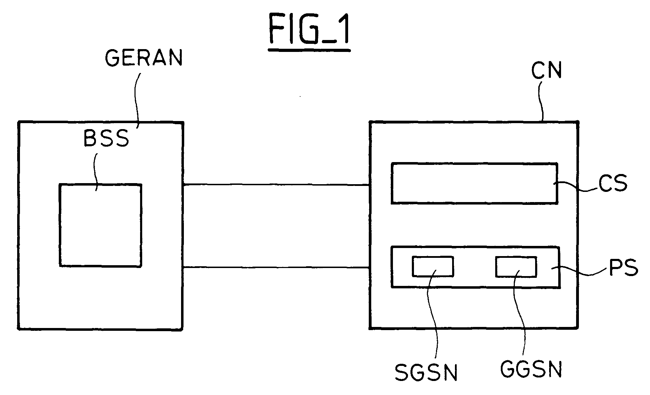

The general architecture of a system using GERAN access technology and packet-switched domain is recalled in figure 1.

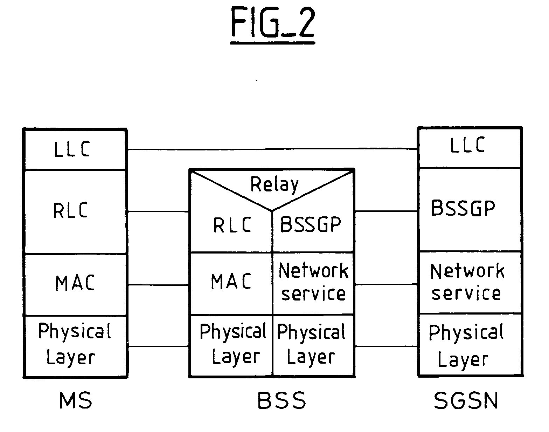

The protocol architecture when considering GERAN access technology and Packet-Switched (PS) domain is recalled in figure 2.

The protocol layers at the radio interface, or interface between MS and BSS, or « Um » interface, include :
- a first layer, or physical layer,
- a second layer, or data link layer, in turn divided into different layers :
   according to increasing levels, MAC (« Medium Access Control »), RLC (« Radio Link Control ») and LLC (« Logical Link Control », the BSS only being used as a relay function between MS and SGSN, for the LLC layer).

In the same way, the protocol layers at the interface between BSS and SGSN, or « Gb » interface, include :
- a first layer, or physical layer,
- a second layer, or data link layer, in turn divided into different layers : according to increasing levels, « Network service », BSSGP (« BSS GPRS Protocol»), and LLC (« Logical Link Control », the BSS only being used as a relay function between MS and SGSN, for the LLC layer).

Besides, higher level protocols are provided, at application level, or for management tasks such as MM (« Mobility Management»), SM (« Session Management»), ...etc.

It is also recalled that frames called LLC frames are formed, in the LLC layer, from data units of higher level. In the LLC frames these data units are called LLC-PDU (« LLC-Protocol Data Units ») data units. LLC-PDU data units are then segmented in the RLC/MAC layer, so as to form blocks called RLC data blocks. RLC data blocks are then put in the required format for transmission on the « Um » interface, in the physical layer.

It is also recalled that channel coding is performed in the physical layer to allow detection and correction of errors in the data transmitted on the radio interface. Different coding schemes (CS-1 to CS-4) are defined for the radio blocks. A coding scheme is generally selected as a function of radio conditions, so that the amount of redundancy is reduced (or in other words the net bit-rate is increased) as radio conditions improve, or on the contrary the amount of redundancy is increased (or in other words the net bit-rate is decreased) as radio conditions degrade. A link adaptation algorithm is generally provided, for the automatic selection of a coding scheme depending on radio conditions.

Besides, in the RLC and LLC layer procedures of re-transmission of non-correctly received data (RLC data blocks or LLC-PDU data units depending on the case) are performed, according to a technique called ARQ ("Automatic Repeat reQuest"). The state, correct or non-correct, of received blocks or data units is signalled by the receiver to the transmitter by means of ACK ("ACKnowledgment") or NACK ("Non-ACKnowledgment") messages.

It is also recalled that some mechanisms are provided for discarding LLC PDUs not yet segmented and which would arrive too late if they had to be re-sent according to the ARQ procedure. A PDU lifetime is provided for that purpose by the SGSN to the BSS, in the BSSGP PDU containing this LLC PDU. The PDU lifetime is generally set depending on the requirements of the considered application.

It is also recalled that before data can be sent or received in a packet data session, a PDP (Packet Data Protocol) context must be activated or created for the MS.

It is also recalled that such systems are cellular systems, and that some techniques therefore have to be provided for enabling a cell change, in particular during the course of a communication. In systems using circuit-switched technology, such techniques generally correspond to handover techniques, which require a reservation of resource in the new cell, by the network, before switching to the new cell. In systems using packet-switched technology, such techniques generally correspond to cell-reselection techniques, which do not require such a reservation of resource in advance in the new cell; instead, the MS performs cell-reselection, and then requires resources in the new selected cell, before normally accessing in packet mode to this new cell. Therefore cell-reselection techniques are not as well adapted to real-time traffic as handover techniques ; however, some other techniques such as NACC (Network Assisted Cell Change) have been introduced to avoid as far as possible such drawbacks.

When considering GERAN access technology, the support of streaming services in the Packet Switched domain requires several basic functions:
- support of Rel-99 GERAN standards in the MS, BSS, and SGSN,
- support of Rel-99 QoS parameter negotiation at PDP context activation time, including a negotiation with the BSS (in Rel-97, the QoS parameters are negotiated only between the MS and the SGSN). This negotiation between the BSS and the SGSN requires the support of the Packet Flow Context feature on the Gb interface (defined in 3GPP TS 08.18),
- support of specific Call Admission Control algorithms in the BSS and the SGSN in order to guarantee real-time constraints such as transfer delay and bitrate, which requires the reservation of resources at the time of a streaming bearer set-up.

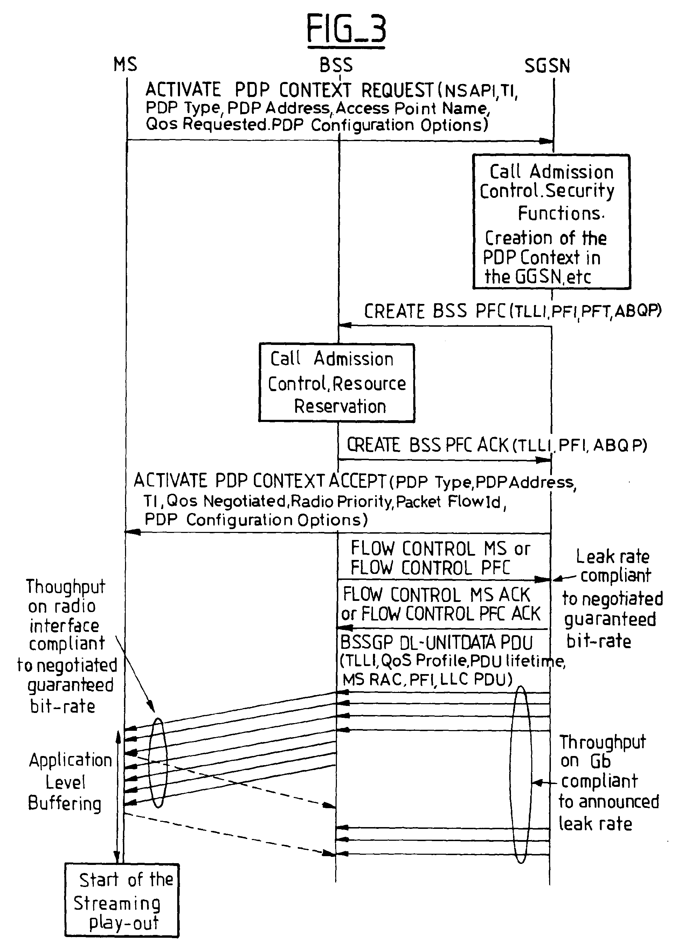

Figure 3 shows an overview of the various steps involved in setting-up a bearer belonging to the streaming class.
1) The R99 MS requests the activation of a PDP context, for which the "QoS Requested" parameters correspond to a streaming bearer. This is characterised mainly by:
   - Traffic class = streaming class
   - Guaranteed bitrate for downlink/uplink <> 0 (in this description, we take the example of downlink streaming flows but the main concepts are equally applicable to uplink streaming flows). This guaranteed bit rate is a bit rate at GPRS service level (including RTP/UDP/IP overheads) not including the overheads due to the radio interface (coming for example from the ARQ mechanism, or the overhead needed to compensate the gaps of transmission due to service interruption following cell reselections)
   - Transfer delay
2) The SGSN may then perform security and trace functions. A Call Admission Control algorithm is called to check whether the required QoS attributes can be fulfilled. The SGSN may then restrict the requested QoS attributes given its capabilities and the current load, and it shall restrict the requested QoS attributes according to the subscribed QoS profile. The SGSN then requests the creation of the PDP context in the GGSN.
3) Various functions are performed in the GGSN, which may even reject the request from the SGSN if the QoS Negotiated received from the SGSN is incompatible with the PDP context being activated.
4) Once the creation of the PDP context in the GGSN has been confirmed as successful, the SGSN then requests the creation of a Packet Flow Context (PFC) for the streaming bearer. Although it is possible in theory to aggregate several bearers into the same PFC, it seems better to create one PFC for each real-time bearer and aggregate only non real-time bearers having similar QoS characteristics within the same PFC. The request from the SGSN contains several mandatory parameters:
   - TLLI: identifier of the Mobile Station
   - PFI: Packet Flow Identifier (identifier of the PFC)
   - PFT: Packet Flow Timer (lifetime of the PFC during periods of inactivity)
   - ABQP: Aggregate BSS QoS Profile (QoS parameters characterising the PFC)
5) The BSS then performs a Call Admission Control algorithm to check whether the requested QoS attributes can be fulfilled. Several functions may be performed in order to be able to support the requested QoS (e.g. reallocation of other MSs, redirection of the MS to another less loaded cell, etc). The BSS may restrict the requested aggregate BSS QoS profile given its capabilities and the current load, although not fulfilling the guaranteed bitrate and the transfer delay attributes should as far as possible be avoided. The BSS performs resource reservation in order to support the negotiated guaranteed bitrate and transfer delay, taking into account the RLC mode that will be used for the flow (quite likely: RLC acknowledged mode since LLC PDUs should be rather large : 500 octets or more for video streaming for instance). The resources reserved on the radio interface need to be higher than the negotiated guaranteed bitrate due to radio interface overheads.
6) The BSS acknowledges the PFC creation if it is successful, providing to the SGSN the negotiated ABQP, i.e. the negotiated Quality of Service attributes.
7) Assuming that the negotiated ABQP is acceptable for the SGSN, the PDP context activation procedure is completed by the sending of an acceptance message to the Mobile Station.
8) Because the SGSN will have to comply with the announced leak rate for the corresponding MS/PFC, it is quite likely that the BSS has to send a FLOW CONTROL MS or FLOW CONTROL PFC message to the SGSN in order to announce a leakrate that is greater than the negotiated guaranteed bitrate (otherwise default values are used). The choice between MS and PFC flow control is implementation dependent and depends also on whether there are other active PFCs for the same MS.
9) The SGSN acknowledges the FLOW CONTROL MS or FLOW CONTROL PFC message.
10) When the streaming session is started (case of downlink streaming) thanks to other upper layer protocols not described in this document, the SGSN sends to the BSS, BSSGP PDUs containing the PDU lifetime, the QoS profile (R97, not useful in this case), the MS Radio Access Capabilities, the PFI and the LLC PDU to be sent.
11) The BSS sends the LLC PDUs to the MS.
12) The MS starts buffering PDUs at application level (quite likely RTP PDUs, RTP standing for Real-Time Protocol) in order to be able later on to accommodate delay variations due to RLC retransmissions, radio outages (e.g. due to cell re-selections), etc.
13) Once the MS has filled its application level buffer, it can start playing out the streaming flow.

In this context, the present invention is based in particular on the following observations.

From the description above, it appears that the critical parameters needing careful dimensioning are the following ones:
- the bandwidth reserved on the radio interface by the BSS in order to fulfil the requested guaranteed bitrate, and
- the initial application level buffering time done in the Mobile Station.

Indeed, the more bandwidth is reserved on the radio interface to serve a given guaranteed bitrate, the smaller the capacity of the cell goes. However, it is important to reserve not just the requested guaranteed bitrate but in fact more, in order to be able to accommodate RLC retransmissions due to radio errors and radio outages due to cell reselections for instance.

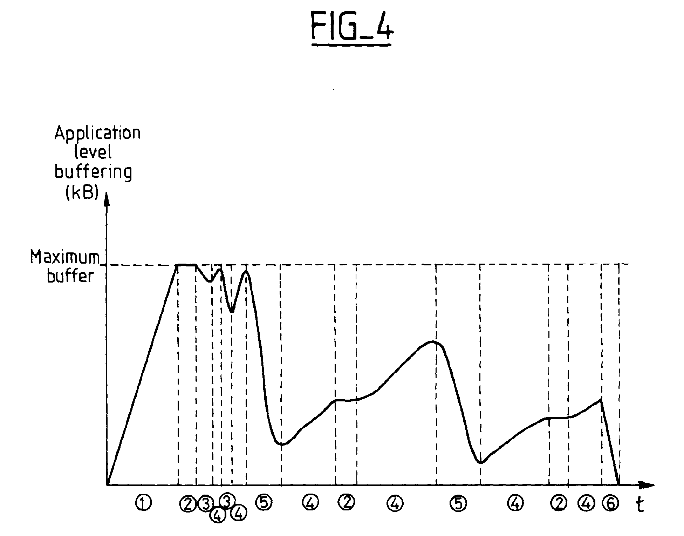

The diagram of figure 4 shows an example of the application level buffer filling in the MS along time.

During the course of the streaming session, the buffer goes through the following states:
- initial filling up to the maximum buffer size (①). Once the buffer is filled up, the streaming session can start to be played out.
- The play-out rate of the streaming session equals the radio throughput (②). Hence the buffer filling remains constant.
- The radio throughput becomes smaller than the play-out rate (due e.g. to radio errors leading to RLC retransmissions) (③). Hence the buffer depleting.
- The radio throughput becomes greater than the play-out rate (due e.g. to good radio conditions leading to increasing the offered throughput beyond the negotiated guaranteed bitrate) (④). Hence the buffer getting filled up again, possibly up to the maximum buffer size (not above assuming that the server sends the streaming PDUs at the play-out rate).
- The Mobile Station does not receive anything from the BSS due to a radio outage (e.g. due to a cell reselection) (⑤). In this case, the buffer will deplete quickly, at the play-out rate.
- The Mobile Station does not receive anything from the BSS because all streaming PDUs have been sent (⑥). In this case, the buffer will deplete at the play-out rate until being empty.

This diagram shows that the calculation of the bandwidth reserved on the radio interface (i.e. the number of allocated Packet Data Channels or PDCHs) to serve a given streaming flow depends on the following parameters:
- the negotiated guaranteed bitrate (likely corresponding to the play-out rate taking into account overheads introduced by RTP/UDP/IP);
- the initial application level buffering;
- the minimum radio throughput available per PDCH (average throughput achievable over x % of the cell coverage; e.g. x = 95);
- the duration of radio outages due to cell reselections and the frequency of cell reselections.

In order to determine an optimised radio bandwidth, the BSS needs to know all those parameters:
- the negotiated guaranteed bitrate is available from the PFC creation procedure;
- the average radio throughput available per PDCH can be derived from the radio conditions, the corresponding RLC retransmission rate (in case RLC acknowledged mode is used) and the link adaptation policy (i.e. which (M)CS is selected). Depending on the knowledge of the C/I ratio in the cell, the BSS has a more or less refined knowledge of the average radio throughput available per PDCH but at least it can have a worst-case knowledge.
- The duration of radio outages due to cell reselections can be calculated by the BSS, the value depending mainly on whether Network Assisted Cell Change procedures are used.
- The initial application level buffering is not known as such and, as will also be explained later in more detailed way, this is one of the problems considered by the present invention.

As soon as those parameters are known, various ways can be considered in order to optimise the radio bandwidth, i.e. provide the smallest possible radio bandwidth while never leading to a complete depletion of the application level buffer in the MS before the end of the streaming session:
- Ensure that the negotiated guaranteed bitrate is not over-valued compared to the end-user application needs (this requires careful setting in the Mobile Station, possibly under control of the operator). Unfortunately, neither the access nor the core networks can do anything about this since they have no clue about the end-user application.
- Reduce cell reselection durations: the NACC procedure can be used. We could even envisage using Packet Switched handover procedures.
- Increase the initial application level buffering. However buffering requires memory in the MS, which is still expensive. Also, the bigger the initial buffering is, the longer the end-user will have to wait between requesting a streaming flow and the start of the session. Therefore it is critically important also not to have a too big initial buffering.

In this context, the present invention in particular recognizes the following problems and suggests the following solutions to these problems.

A first problem is that today the radio bandwidth allocated to a streaming flow is not fully optimised, because the application parameter corresponding to the initial application level buffering is not taken into account when performing call admission control and radio resource reservation. The application parameter consisting in the transfer delay which is taken into account today does not enable such an optimisation, because this parameter is generally set according to the application, whereas for a same application, the radio resource required may vary depending on the buffering capacity (and therefore the cost) of the MS. The radio bandwidth allocated to a streaming flow is not either continuously optimised during the course of a session, because the application level buffering is not either taken into account during the course of the session. Another, related, problem is that, according to today's 3GPP standard, this application parameter is not known in the entity performing the call admission control and radio resource reservation, i.e. the BSS.

A second problem is that, since cheap MSs (e.g. with little buffering capacity, or not supporting NACC, etc...) will require the reservation of more radio bandwidth than others, charging is not optimised today since it is based on the guaranteed bitrate, rather than on the allocated radio bandwidth. Another, related, problem is that, according to today's 3GPP standard, this allocated radio bandwidth is not known by the network entity which would need it, for such a charging purpose.

A third problem is that the above-recalled mechanisms of LLC PDUs discarding are not fully optimised today. It is recalled that such discarding mechanisms are used for streaming bearers, since RLC acknowledged mode is likely to be used for streaming bearers, and since RLC in (E)GPRS today is based on such an ARQ mechanism. However these mechanisms are not optimised today because the PDU lifetime is generally set according to the application, rather than on the application level buffering which, for a same application, may vary depending on the buffering capacity (and therfore the cost) of the MS. Another, related, problem is that according to today's 3GPP standard this parameter is not known in the network entity in charge of setting this LLC PDU lifetime, i.e. the SGSN.

The present invention in particular enables to solve part or all of the above identified problems. The present invention enables to optimise the support of streaming services in the packet domain of a mobile communication system. More generally the present invention enables to optimise the support of packet-switched services in a mobile communication system.

An object of the present invention is a method for optimising the support of streaming services in the packet switched domain of a mobile communication system, a method wherein information representative of time alignment capability of a mobile station is sent by the mobile station to the network.

According to one embodiment, said information includes information representative of a buffer size at application level in the mobile station.

According to another embodiment, said buffer size corresponds to the initial filling of said buffer, at the beginning of a packet session, before playing out the streaming flow.

According to another embodiment, said buffer size corresponds to the real-time filling of said buffer, during the course of a packet session.

According to another embodiment, said information is provided as an additional information specifying QoS parameters at the time of a PDP context activation.

According to another embodiment, said information is provided as an information specifying a QoS parameter corresponding to a transfer delay attribute, at the time of a PDP context activation.

According to another embodiment, said information is provided by the MS to the SGSN in a message requesting the creation of a PDP (Packet Data Protocol ) context.

According to another embodiment, said message is the message « Activate PDP Context Request ».

According to another embodiment, said information is provided by the SGSN to the BSS in a message requesting the creation of a PFC (Packet Flow Context).

According to another embodiment, said message is the message « Create BSS PFC ».

According to another embodiment, said real-time buffer size is provided in acknowledgement messages sent by the MS to the BSS during the course of a packet session.

According to another embodiment, said real-time buffer size received by the BSS from the MS is forwarded to the SGSN.

According to another embodiment, said information representative of time alignment capability of a mobile station is taken into account by the network, in a way as to optimise the radio resource allocated to said mobile station, at the time of performing call admission control and radio resource reservation.

According to another embodiment, said information representative of time alignment capability of a mobile station is representative of real-time alignment capability of the mobile station, and is taken into account by the network, in a way as to optimise the radio resource allocated to said mobile station, by dynamically adjusting the radio resource allocated to said mobile station, during the course of the packet session.

According to another embodiment, said information representative of time alignment capability of a mobile station is taken into account by the network, in a way as to optimize the setting of a packet data unit lifetime to be sent to the MS.

Another object of the present invention is a method for optimising the charging of packet-switched services, a method wherein the charging of a packet session is based on radio throughput usage for the session.

According to one embodiment, said radio throughput usage corresponds to radio throughput reserved for the session.

According to another embodiment, said radio throughput reserved for the session is the result of a call admission control algorithm.

According to another embodiment, said radio throughput reserved for the session is provided by the BSS to the SGSN.

According to another embodiment, said radio throughput reserved for the session is provided by the BSS to the SGSN in a BSSGP message called « Create BSS PFC ACK ».

According to another embodiment, said radio throughput usage corresponds to radio throughput really granted for the session.

According to another embodiment, said radio throughput really granted for the session corresponds to the average radio throughput granted throughout the session.

According to another embodiment, said average radio throughput granted throughout the session is determined by the BSS, which, for this purpose, is informed by the SGSN of the end of the session.

According to another embodiment, the BSS is informed by the SGSN of the end of the session by the SGSN sending to the BSS a DELETE-BSS-PFC PDU after the end of the packet session and before the PFT has expired in the BSS.

According to another embodiment, a parameter is included in said DELETE-BSS-PFC PDU to notify the BSS that the PFC shall be deleted only when the currently stored LLC PDUs for that PFC have been sent.

According to another embodiment, said average radio throughput granted throughout the session is determined by the SGSN, from the amount of data which has been sent, and from the time between the first LLC PDU sent to the BSS and the receipt of a DELETE-BSS-PFC-ACK PDU from the BSS.

Another object of the present invention is a mobile station (MS), comprising means for performing such a method.

Another object of the present invention is a network element for a radio access (BSS) of a mobile communication network, comprising means for performing such a method.

Another object of the present invention is a network element (SGSN) for a core network of a mobile communication system, comprising means for performing such a method.

These and other objects of the present invention will become more apparent from the following description taken in conjunction with the accompanying drawings:
- figure 1 is a diagram intended to recall the general architecture of a system using GERAN access technology and packet-switched domain,
- figure 2 is a diagram intended to recall the protocol architecture in a system using GERAN access technology and Packet-Switched (PS) domain,
- figure 3 is a diagram intended to recall the different steps involved in the setting-up of a bearer belonging to the streaming class,
- figure 4 is a diagram intended to recall the different possible states of the application level buffer intended to be filled by a traffic flow belonging to the streaming class.

The present invention may also be explained as follows, and different examples of carrying out the present invention are also disclosed in the following.

It is proposed that the transfer delay attribute of a streaming bearer corresponds to the buffer size at application level, used to ensure time alignment of the streaming flow. Knowing the buffer size in Bytes and knowing the play-out rate in Bytes/sec, the MS can easily work out the equivalent buffer size in seconds and provide this within the QoS Information Element, which is included in the ACTIVATE PDP CONTEXT REQUEST message.

Alternatively, it is proposed to introduce a new QoS parameter, valid only for streaming class bearers, corresponding to the size of the "time alignment function of the application" (according to the terminology used in 3GPP TS 23.107).

Note that the initial application level buffer size would then be known by the SGSN. It can then be forwarded to the BSS within the CREATE BSS PFC message, in order to be used by the call admission control algorithm.

In fact the real-time knowledge of the buffer filling each time the SGSN sends an LLC PDU would also help further optimising the radio bandwidth granted at a given time (by adjusting dynamically the allocated radio bandwidth depending on the application level buffer filling). One way to achieve this would be to include the instantaneous application level buffer filling in each PACKET DOWNLINK ACK/NACK (message sent to the BSS periodically). In order to convey that information up to the SGSN, either a message could be created at LLC level to report this transparently through the BSS or the information obtained by the BSS in PACKET DOWNLINK ACK/NACK messages could be sent to the SGSN in a new BSSGP message.

It is also proposed that the PDU lifetime set by the SGSN be valued depending on the value of this application level buffer size.

Although the solution to provide real-time knowledge of the application level buffer filling from the MS to the BSS seems rather easy, solutions to convey this up to the SGSN appear quite complex for a gain that would probably not be significant. Therefore it is also proposed that the PDU lifetime be valued depending on the value of the initial application level buffer size. Since at a given time, the buffer size may be smaller, it may then happen that some LLC PDUs are received too late by the MS, but this should be marginal.

It is also proposed that the reserved radio bandwidth, a result of the BSS call admission control algorithm, be provided to the SGSN in the CREATE BSS PFC ACK message. This information would then be included in the Call Detail Record of the streaming session in order to be able to charge the PS call based on the bandwidth actually granted to the MS and not on the negotiated guaranteed bitrate.

What could be argued against such a proposal is that the reserved radio bandwidth may be excessive and then part of it could be used by other MSs or other PFCs of the same MS. In this case the streaming session would be charged for a radio bandwidth that has been partly used by other sessions. We could therefore also envisage providing the average radio bandwidth that has been really granted to the streaming session at the end of it. This could be achieved e.g. by the SGSN sending a DELETE-BSS-PFC PDU after the end of the streaming session and before the PFT has expired in the BSS (possibly including a specific parameter to ask for the average radio throughput that has been granted to the PFC). The BSS would answer through a DELETE-BSS-PFC-ACK PDU including a new Information Element corresponding to that average radio throughput. Other information may also be included in the future for charging purpose. However the problem is that the SGSN does not know exactly when the streaming flow ends on the radio interface since there may be some buffering in the BSS. A new parameter could be introduced in the DELETE-BSS-PFC PDU to notify the BSS that the PFC shall be deleted only when the currently stored LLC PDUs for that PFC have been sent (and acknowledged if operating in RLC acknowledged mode).

Note that a third solution, although less accurate, could consist in the SGSN computing itself the radio throughput by considering the amount of data which has been sent and the time between the sending of the first LLC PDU to the BSS and the receipt of the DELETE-BSS-PFC-ACK PDU from the BSS, assuming that the latter message would be sent only when all LLC PDUs have been sent to the MS (see above).

The present invention also has for its object a mobile station (MS), comprising means for performing a method according to any of the above described methods.

The present invention also has for its object a a network element for a radio access (BSS) of a mobile communication network , comprising means for performing a method according any of the above described methods.

The present invention also has for its object a network element (SGSN) for a core network of a mobile communication system, comprising means for performing a method according any of the above described methods.

The detailed implementation of such means does not raise any special problem for a person skilled in the art, and therefore such means do not need to be more fully disclosed than has been made above, by their function, for a person skilled in the art.

## Claims

1. A method for optimising the support of streaming services in the packet switched domain of a mobile communication system, a method wherein information representative of time alignment capability of a mobile station is sent by the mobile station to the network.

2. A method according to claim 1, wherein said information includes information representative of a buffer size at application level in the mobile station.

3. A method according to claim 2, wherein said buffer size corresponds to the initial filling of said buffer, at the beginning of a packet session, before playing out the streaming flow.

4. A method according to claim 2, wherein said buffer size corresponds to the real-time filling of said buffer, during the course of a packet session.

5. A method according to claim 3, wherein said information is provided as an additional information specifying QoS parameters at the time of a PDP context activation.

6. A method according to claim 3, wherein said information is provided as an information specifying a QoS parameter corresponding to a transfer delay attribute, at the time of a PDP context activation.

7. A method according to claim 5 or 6, wherein said information is provided by the MS to the SGSN in a message requesting the creation of a PDP (Packet Data Protocol ) context.

8. A method according to claim 7, wherein said message is the message « Activate PDP Context Request ».

9. A method according to claim 5 or 6, wherein said information is provided by the SGSN to the BSS in a message requesting the creation of a PFC (Packet Flow Context).

10. A method according to claim 9, wherein said message is the message « Create BSS PFC ».

11. A method according to claim 4, wherein said real-time buffer filling is provided in acknowledgement messages sent by the MS to the BSS during the course of a packet session.

12. A method according to claim 11, wherein said real-time buffer filling received by the BSS from the MS is forwarded to the SGSN.

13. A method according to any of claims 1 to 12, wherein said information representative of time alignment capability of a mobile station is taken into account by the network, in a way as to optimise the radio resource allocated to said mobile station, at the time of performing call admission control and radio resource reservation.

14. A method according to any of claims 1 to 12, wherein said information representative of time alignment capability of a mobile station is representative of real-time alignment capability of the mobile station, and is taken into account by the network, in a way as to optimise the radio resource allocated to said mobile station, by dynamically adjusting the radio resource allocated to said mobile station, during the course of the packet session.

15. A method according to any of claims 1 to 12, wherein said information representative of time alignment capability of a mobile station is taken into account by the network, in a way as to optimize the setting of a packet data unit lifetime to be sent to the MS.

16. A method for optimising the charging of packet-switched services, a method wherein the charging of a packet session is based on radio throughput usage for the session.

17. A method according to claim 16, wherein said radio throughput usage corresponds to radio throughput reserved for the session.

18. A method according to claim 17, wherein said radio throughput reserved for the session is the result of a call admission control algorithm.

19. A method according to claim 18, wherein said radio throughput reserved for the session is provided by the BSS to the SGSN.

20. A method according to claim 19, wherein said radio throughput reserved for the session is provided by the BSS to the SGSN in a BSSGP message called Create BSS PFC ACK.

21. A method according to claim 16, wherein said radio throughput usage corresponds to radio throughput really granted for the session.

22. A method according to claim 16, wherein said radio throughput really granted for the session corresponds to the average radio throughput granted throughout the session.

23. A method according to claim 22, wherein said average radio throughput granted throughout the session is determined by the BSS, which, for this purpose, is informed by the SGSN of the end of the session.

24. A method according to claim 23, wherein the BSS is informed by the SGSN of the end of the session by the SGSN sending to the BSS a DELETE-BSS-PFC PDU after the end of the packet session and before the PFT has expired in the BSS.

25. A method according to claim 24, wherein a parameter is included in said DELETE-BSS-PFC PDU to notify the BSS that the PFC shall be deleted only when the currently stored LLC PDUs for that PFC have been sent.

26. A method according to claim 22, wherein said average radio throughput granted throughout the session is determined by the SGSN, from the amount of data which has been sent, and from the time between the first LLC PDU sent to the BSS and the receipt of a DELETE-BSS-PFC-ACK PDU from the BSS.

27. A mobile station (MS), comprising means for performing a method according to any of claims 1 to 26.

28. A network element for a radio access (BSS) of a mobile communication network , comprising means for performing a method according to any of claims 1 to 26.

29. A network element (SGSN) for a core network of a mobile communication system, comprising means for performing a method according to any of claims 1 to 26.
